# EUROPÄISCHE PATENTSCHRIFT

(11) **EP 2 015 389 B1**
(45) Veröffentlichungstag und Bekanntmachung des Hinweises auf die Patenterteilung: **05.03.2014**
(21) Anmeldenummer: 08010772.5
(22) Anmeldetag: 13.06.2008
(51) Int. Cl.: H01M 10/46, H02J 7/00

(54) **Vorrichtung mit elektrischem Gerät und Ladestation**
Device with electrical device and charging station
Dispositif doté d'un appareil électrique et d'une station de charge

(30) Priorität: 04.07.2007 DE 102007031008
(43) Veröffentlichungstag der Anmeldung: 14.01.2009
(73) Patentinhaber: Braun GmbH, 61476 Kronberg (DE)
(72) Erfinder: Loth-Krausser, Hartmut, 64589 Stockstadt (DE)

(56) Entgegenhaltungen:
- EP-A- 0 575 723
- WO-A-2004/010518
- DE-A1-102005 038 923
- DE-B- 1 248 875
- US-A1- 2006 202 702

## Beschreibung

Die Erfindung betrifft eine Vorrichtung mit einem elektrischem Gerät, welches mit austauschbaren und wiederaufladbaren Batterien betrieben wird, mit einer Ladestation und mit zwei oder mehr Batterieeinheiten, wobei die Ladestation zwei oder mehr Aufnahmen zum Halten und Laden der Batterieeinheiten aufweist.

Elektrische Geräte, die mit austauschbaren und wiederaufladbaren Batterien betrieben werden, insbesondere Geräte, deren Batterien aus ergonomischen Gründen klein gehalten und deshalb während einer Anwendung vollständig entleert werden, können ein schnelles Aufladen der Batterien erfordern, um nach möglichst kurzer Zeit kabellos und mit möglichst vollen Batterien weiter arbeiten zu können. Geräte mit kurzzeitig besonders hohem Strombedarf sind beispielsweise Lockenstäbe, Haarglätter, Haartrockner, Stabmixer und Akku-Werkzeuge. Etwas geringeren Strombedarf erfordern digitale Kameras und Mobiltelefone.

Üblicherweise sind mehrere Akkumulatorzellen zu einer Batterieeinheit mit eigenem Gehäuse zusammengefasst. Für bestimmte Anwendungen kann auch eine einzige Akkumulatorzelle vorhanden sein. Der Benutzer kann die Batterieeinheit zum Aufladen oder zum Austausch vom Gerät trennen und anschließend wieder mit dem Gerät verbinden. Um die Unterbrechungszeit für eine Wiederaufladung während einer Benutzung zu minimieren, kann eine leere Batterieeinheit gegen eine geladene ausgetauscht werden. Gerät und Batterieeinheit sind üblicherweise so gestaltet, dass für das Trennen und Verbinden zwei Hände erforderlich sind.

Aus der GB 2 299 755 ist ein batteriebetriebener Haartrockner bekannt, bei dem eine Batterieeinheit am Gerätegriff gehalten ist. Das Gerät ist mit angeschlossener Batterieeinheit in eine passende Aufnahme einer speziellen Ladestation einsetzbar. Letztere weist eine zweite Aufnahme für eine zweite Batterieeinheit auf. Die Möglichkeit eines besonders schnellen und einfachen Wechselns der Batterieeinheiten ist nicht ersichtlich.

Aufgabe der vorliegenden Erfindung ist es eine Lösung zur Verfügung zu stellen, die es ermöglicht eine leere Batterieeinheit des Gerätes gegen eine an der Ladestation bereitgehaltene, geladene Batterieeinheit innerhalb weniger Sekunden und auf möglichst einfache Weise auszutauschen. Insbesondere soll eine Bedienung mit beiden Händen nicht erforderlich sein.

Die erfindungsgemäße Vorrichtung ist durch die in Anspruch 1 enthaltenen Merkmale definiert.

Als einhändige Bedienung wird vorzugsweise eine solche Bedienung verstanden, bei der
- die Übergabe der Batterieeinheit vom Gerät an die Ladestation (Ankoppeln der Batterieeinheit an die Ladestation und Abkoppeln der Batterieeinheit vom Gerät) durch eine einzige lineare Bewegung (Steckbewegung) des Gerätes mit der Batterieeinheit möglich ist, oder
- bei der eine einzige lineare Bewegung kombiniert wird mit einer anschließenden oder vorangehenden Drehbewegung, oder
- bei der eine einzige lineare Bewegung der Hand mit der Batterieeinheit kombiniert wird mit der Ausübung einer Druck-, Schwenk- oder Schiebebewegung durch den Daumen oder einen anderen Finger der aktiven Hand des Benutzers.

Die Erfindung ist aber nicht beschränkt auf diese Arten der einhändigen Bedienung. Die Übergabe der geladenen Batterie von der Ladestation an das Gerät erfolgt analog.

Bevorzugt wird eine Ausbildung der Vorrichtung derart, dass bei der einhändigen Bedienung nicht umgegriffen werden muss. Die Hand greift vorzugsweise ausschließlich das Gerät, führt die angekoppelte Batterieeinheit in die Aufnahme der Ladestation und koppelt dort die Batterieeinheit vom Gerät ab und an die Ladestation an durch insbesondere nur ein oder zwei Bewegungen. Dabei gilt eine lineare Bewegung zum Einstecken der Batterieeinheit in die Aufnahme der Ladestation als eine Bewegung und eine ggf. vorgesehene Drehbewegung der Batterieeinheit (mit Gerät) oder die Betätigung einer Drucktaste, eines Hebels oder eines Schiebers als zweite Bewegung.

Nach einem weiteren Gedanken der Erfindung ist vorgesehen, dass die ersten und zweiten Verbindungsmittel jeweils eine mechanische Verriegelung und elektrische Kontakte beinhalten. Die mechanische Verriegelung kann durch Kraftschluss, Reibschluss oder Formschluss erfolgen, beispielsweise auch durch Anordnung einer geneigten Fläche mit Selbsthemmung oder einen Formschluss, der durch Beaufschlagung mit einer Feder in Position gehalten wird. Die elektrischen Kontakte können in die mechanische Verriegelung integriert sein, insbesondere in bewegliche Teile der mechanischen Verriegelung, oder räumlich getrennt angeordnet sein.

Die Batterieeinheiten weisen elektrische Kontakte zum Anschluss des Gerätes und der Ladestation auf, sodass eine Batterieeinheit zugleich an das Gerät und an die Ladestation angeschlossen sein kann. Auch dies erleichtert und vereinfacht das einhändige, schnelle Wechseln der Batterieeinheiten. Insbesondere weisen die Batterieeinheiten elektrische Kontakte an einander gegenüberliegenden Seiten auf. Demnach ist an beiden Seiten je ein Pluspol und Minuspol vorhanden.

Nach einem weiteren Gedanken der Erfindung ist die elektrische Verbindung zwischen Batterieeinheit und Gerät und/oder zwischen Batterieeinheit und Ladestation verpolungssicher, insbesondere durch verpolungssicher ausgebildete oder angeordnete elektrische Kontakte, oder durch Verbindungsmittel, die so ausgeführt sind, dass eine Verpolung ausgeschlossen ist. Ziel ist die Vermeidung von Fehlspannungen oder Kurzschlüssen. Erreicht werden kann dies beispielsweise durch asymmetrische Gestaltung der Verbindungsmittel, sodass eine Verbindung zwischen Batterieeinheit und Gerät oder Ladestation nur in einer bestimmten Ausrichtung möglich ist. Alternativ könnte bei einer in verschiedenen Winkelpositionen aufsetzbaren Batterieeinheit auch die Anordnung teilringförmiger Kontakte vorgesehen sein.

Nach einem weiteren Gedanken der Erfindung sind die ersten und zweiten Verbindungsmittel zueinander symmetrisch ausgebildet, derart, dass die Batterieeinheiten jeweils zwei Verbindungseinrichtungen aufweisen, die sowohl bzw. wahlweise mit einer Verbindungseinrichtung am Gerät als auch mit einer Verbindungseinrichtung an der Ladestation verbindbar sind. Dadurch muss der Benutzer bei der ersten Installation oder bei außerplanmäßiger Entnahme einer Batterieeinheit deren Ausrichtung zum Gerät und/oder zur Ladestation nicht beachten.

Nach einem weiteren Gedanken der Erfindung sind die ersten und/oder zweiten Verbindungsmittel derart gestaltet, dass durch eine Drehbewegung des Geräts eine Batterieeinheit vom Gerät entriegelbar und mit der Ladestation verriegelbar ist, insbesondere durch eine Drehbewegung um eine Achse, die sich vom Gerät durch die Batterieeinheit zur Ladestation erstreckt. Vorzugsweise verläuft die Drehachse parallel zur Längsachse der Batterieeinheit oder mit der Längsachse deckungsgleich. Auch kann die Drehachse senkrecht zur Oberfläche der Ladestation ausgerichtet sein.

Nach einem weiteren Gedanken der Erfindung sind die Verbindungsmittel derart gestaltet, dass eine Batterieeinheit durch ein Feder-Taster-System wie bei einem Kugelschreiber mit dem Gerät und/oder der Ladestation verbindbar ist. Dadurch ist es möglich, die Batterieeinheit durch eine einzige Steckbewegung mit der Ladestation zu verbinden und zugleich vom Gerät zu lösen.

In Fortbildung der Erfindung ist vorgesehen, dass die Batterieeinheit ein Außengehäuse und ein Innengehäuse aufweist, wobei das Innengehäuse im Außengehäuse gegen die Kraft einer Feder bewegbar ist. Das Innengehäuse hat dann bei einer Betätigung wie bei einem Kugelschreiber eine ähnliche Funktion wie die Kugelschreibermine.

Nach einem weiteren Gedanken der Erfindung ist ein von außen bedienbares Betätigungsmittel für die Betätigung von mechanischen Verriegelungen zwischen Batterieeinheit und Ladestation und/oder Batterieeinheit und Gerät vorgesehen, wobei das Betätigungsmittel insbesondere ein Schieber ist. Der Schieber kann über Hebel mit geeigneten Verriegelungsmitteln gekoppelt sein. Das Betätigungsmittel ist an der Batterieeinheit, am Gerät oder an der Ladestation angeordnet.

Nach einem weiteren Gedanken der Erfindung ist vorgesehen, dass die Ladestation - zum Anschluss der Batterieeinheiten - je eine Verbindungseinrichtung mit einem vorzugsweise starren Verriegelungsmittel aufweist, insbesondere je einen Kupplungszapfen mit Hinterschneidung, und dass die Batterieeinheit hierzu korrespondierend eine Verbindungseinrichtung mit bewegbarem Verriegelungsmittel aufweist, insbesondere einen hinter die Hinterschneidung bewegbaren Hebel. Hebel und Hinterschneidung bilden dann einen entriegelbaren Formschluss.

Auch das Gerät kann zum Anschluss der Batterieeinheit eine Verbindungseinrichtung mit einem starren Verriegelungsmittel aufweisen, insbesondere einen Kupplungszapfen mit Hinterschneidung, während die Batterieeinheit hierzu korrespondierend eine Verbindungseinrichtung mit bewegbarem Verriegelungsmittel aufweist, insbesondere einen hinter die Hinterschneidung bewegbaren Hebel. Auch hier ist ein lösbarer Formschluss zwischen Hebel und Hinterschneidung möglich.

Nach einem weiteren Gedanken der Erfindung ist vorgesehen, dass die Batterieeinheit bewegbare Hebel als Verriegelungsmittel aufweist, und dass die Hebel durch Anlage an bewegbaren Auflaufflächen bewegbar sind, wobei die Auflaufflächen insbesondere Teile je eines konischen Zapfens der Batterieeinheit, des Geräts und/oder der Ladestation sind. Vorzugsweise sind die Hebel zweiarmig ausgebildet, mit einem abgewinkeltem Arm, der hinter die Hinterschneidung greift und mit einem weiteren Arm, der an der Auflauffläche anliegt.

Die verschiedenen Ausführungen und Eigenschaften der Wechselmechanismen werden nachstehend systematisch dargestellt. Dabei wird unterschieden zwischen der Art der Verriegelung oder Kopplung, den Mitteln zum Steuern der Verriegelung oder Kopplung und der Position der Mittel zum Steuern der Verriegelung oder Kopplung:
- Die Verriegelung kann mechanisch wirken, durch Kraftschluss, Reibschluss oder Formschluss.
- Die Verriegelung kann magnetisch wirken. Beispielsweise hält ein Elektromagnet Gerät und Batterieeinheit bzw. Batterieeinheit und Ladestation zusammen.
- Die Mittel zum Steuern der Verriegelung sind mechanischer Art, beispielsweise Schieber, Hebel oder Druckorgane. Auch kann das Steuern der Verriegelung allein oder zusätzlich durch Bewegung des Gerätes mit Batterieeinheit erfolgen, beispielsweise durch Drehen, Auf- oder Abbewegen, durch Schwenken oder auf andere Weise.
- Die Mittel zum Steuern der Verriegelung können elektrischer Art oder optoelektronisch sein. Beispielsweise steuern ein Taster, Sensor oder Schalter einen Elektromagnet, der entweder die Kopplungskraft erzeugt oder der mechanische Mittel zur Kopplung oder Verriegelung bewegt. Möglich ist auch eine automatische elektrische Steuerung der Verriegelung bzw. Kopplung. So erkennt das System den Ladezustand "leer" der ersten Batterieeinheit und löst deren Abkopplung vom Gerät und die Ankopplung an die Ladestation aus. Außerdem erkennt das System den Ladezustand "voll" der zweiten Batterieeinheit und löst die Ankopplung an das Gerät und die Abkopplung von der Ladestation aus.
- Die Position der Mittel zum Steuern der Verriegelung bzw. Kopplung kann am Gerät, an der Batterieeinheit oder an der Ladestation vorgesehen sein.
- Ermöglicht wird eine einhändige Bedienung zum Wechseln der Batterieeinheiten. In diesem Zusammenhang bedeutet "einhändig", dass die führende Hand die Batterieeinheit mit Gerät ohne Loslassen bewegt. "Ohne Loslassen" beinhaltet noch, dass von der führenden Hand Mittel zum Steuern der Verriegelung an der Ladestation, am Gerät oder an der Batterieeinheit, etwa durch Bewegung eines oder mehrerer Finger, mit betätigt werden. Eine einhändige Bedienung mit zwischenzeitlichem Loslassen des Gerätes (bzw. der Batterieeinheit) oder eine zweihändige Bedienung ist ebenfalls möglich, etwa bei Anordnung der Mittel zum Steuern der Verriegelung/Kopplung an der Ladestation.

Weitere Merkmale der Erfindung ergeben sich aus der Beschreibung im Übrigen und aus den Ansprüchen. Vorteilhafte Ausführungsbeispiele der Erfindung werden nachfolgend anhand von Zeichnungen näher erläutert. Es zeigen:
- Fig. 1: eine Prinzipsskizze einer Ladestation mit stehenden Batterieeinheiten und einem mit einer Batterieeinheit verbundenen elektrischen Gerät,
- Fig. 2: eine Ladestation mit hängenden Batterieeinheiten und relativ zur Ladestation hängendem Gerät,
- Fig. 3: einen Längsschnitt durch die Anordnung gemäß Fig. 1 entlang der Linie C-C, wobei ein Auswechseln der Batterieeinheit durch eine Steck-Drehbewegung des Gerätes zusammen mit der Batterieeinheit durchgeführt wird,
- Fig. 3a: einen Querschnitt durch die Anordnung gemäß Fig. 1 entlang der Linie A-A (Steck-Dreh-Verbindung),
- Fig. 3b: einen Querschnitt durch die Anordnung gemäß Fig. 1 entlang der Linie B-B (Steck-Dreh-Bewegung),
- Fig. 4: einen Längsschnitt ähnlich Fig. 3, mit Gerät, Batterieeinheit und Ladestation zur Darstellung eines Wechselmechanismus analog der Mechanik eines Kugelschreibers, nämlich mit Ab-Auf-Bewegung in Richtung einer Längsachse,
- Fig. 5: einen Längsschnitt ähnlich Fig. 4, jedoch mit einem Wechselmechanismus mit Schieber an der Batterieeinheit,
- Fig. 6: einen Längsschnitt ähnlich Fig. 5, jedoch mit einer elektromagnetisch gesteuerten Verriegelung.

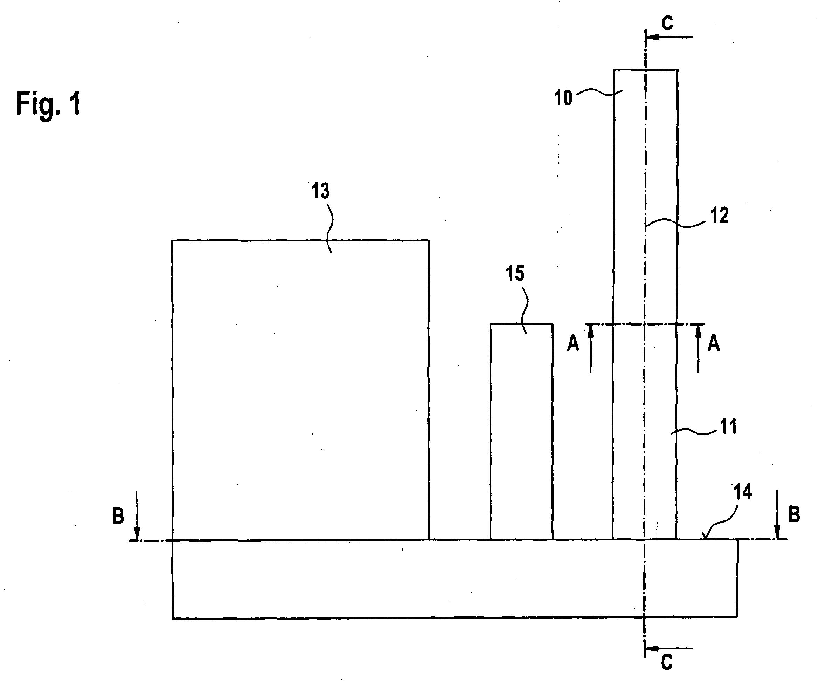

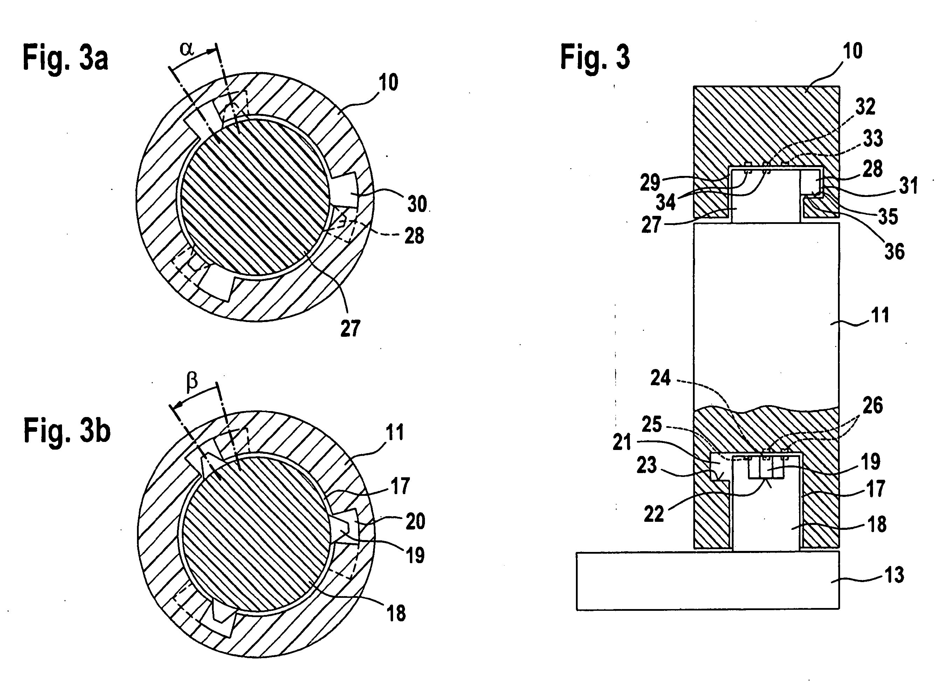

Ein elektrisches Gerät 10, beispielsweise ein Stabmixer, ist mit einer Batterieeinheit 11 elektrisch und mechanisch verbunden. Gerät 10 und Batterieeinheit 11 sind jeweils länglich ausgebildet und axial hintereinander angeordnet. Eine entsprechende Längsachse ist in Fig. 1 mit der Ziffer 12 bezeichnet. Die Längsachse 12 markiert zugleich eine Schnittebene C-C für die Darstellung in Fig. 3.

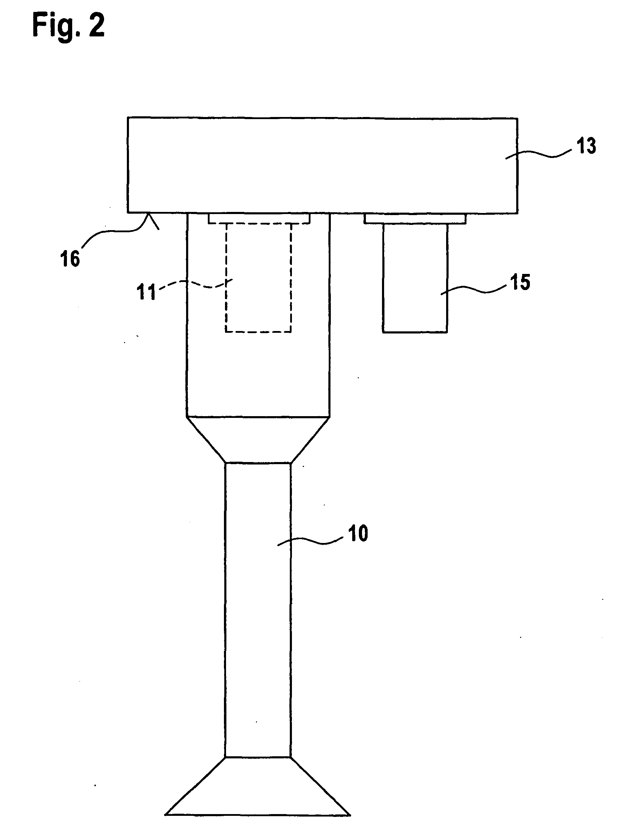

Die Batterieeinheit 11 ist an ihrem dem Gerät 10 gegenüberliegenden Ende mit einer Ladestation 13 elektrisch und mechanisch verbunden. Die Ladestation 13 weist hierzu geeignete Aufnahmen auf, die in den Fig. 1 und 2 nicht gezeigt sind. Dabei steht die Batterieeinheit 11 senkrecht auf bzw. relativ zu einer Fläche 14 der Ladestation 13. Die mechanische Verbindung kann eine mechanische Verriegelung und/oder einen Anpressdruck beinhalten.

Neben der Batterieeinheit 12 ist eine weitere Batterieeinheit 15 in der selben Ausrichtung vorgesehen und mit der Ladestation 13 ebenfalls elektrisch und mechanisch verbunden. In der Anordnung der Fig. 1 werden beide Batterieeinheiten 11, 15 aufgeladen. Zugleich ist die Batterieeinheit 11 zusammen mit dem Gerät 10 auf einfache Weise von der Ladestation 13 abnehmbar.

Fig. 2 zeigt eine hängende Anordnung aus Ladestation 13, Batterieeinheiten 11, 15 und Gerät 10. Die Batterieeinheiten 11, 15 sind - an einer Unterseite 16 der Ladestation 13 lösbar gehalten. Das Gerät 10 (ein Stabmixer) steckt auf der Batterieeinheit 11 und ist zumindest mit dieser elektrisch und mechanisch verbunden. Zusätzlich kann eine mechanische Verbindung zur Ladestation 13 bestehen. Das Gerät 10 wird hier von unten auf die Batterieeinheit 11 gesteckt und hängt dann an dieser oder an der Ladestation 13.

Ladestation 13, Gerät 10 und jede Batterieeinheit 11, 15 sind mit Verbindungsmitteln versehen, die es ermöglichen, die Batterieeinheit 11 vom Gerät 10 einhändig zu entkoppeln und mit der Ladestation 13 zu verbinden und ebenfalls einhändig die andere Batterieeinheit 15 mit dem Gerät 10 zu verbinden und von der Ladestation 13 zu entkoppeln.

Die Ladestation 13 ist vorzugsweise so gestaltet, dass sie durch die genannten Handbewegungen selbst nicht bewegt wird. Dies wird beispielsweise durch ausreichend große Haftreibung an einer Standfläche, durch ausreichend große Masse oder durch Festschrauben an einer Wand oder Decke erreicht.

Details der Verbindungsmittel im Bereich der Ladestation 13, der Batterieeinheiten 11, 15 und des Gerätes 10 werden nachfolgend anhand der Figuren 3 - 5 erläutert.

In der Ausführungsform der Figuren 3, 3a und 3b sind Verbindungsmittel zwischen den Batterieeinheiten (hier: Batterieeinheit 11) und dem Gerät einerseits sowie zwischen den Batterieeinheiten und der Ladestation 13 andererseits so ausgebildet, dass das Ankoppeln der Batterieeinheit an die Ladestation 13 und das Entkoppeln derselben Batterieeinheit vom Gerät 10 durch eine Steck-Dreh-Bewegung ausgeführt werden kann. Zunächst wird die mit dem Gerät 10 verbundene Batterieeinheit 11 mit einer hier zylindrischen Vertiefung 17 auf einen korrespondierenden Vorsprung 18 der Ladestation 13 aufgesteckt. Dabei erstreckt sich der Vorsprung 18 als Aufnahme für die Batterieeineheit 11 von der Oberfläche 14 ausgehend nach oben. Alternativ ist eine hängende Anordnung entsprechend Fig. 2 möglich.

Der Vorsprung 18 weist an seinem oberen Ende mindestens einen, vorzugsweise jedoch mehrere seitwärts gerichtete Zapfen 19 auf. Im vorliegenden Fall sind mit gleichen Abständen zueinander am Umfang des Vorsprungs 18 drei Zapfen 19 angeordnet. Um diese aufnehmen zu können, weist die Vertiefung 17 korrespondierende Längsschlitze 20 auf. An diese schließen in Umfangsrichtung Hohlräume 21 an, welche so groß bemessen sind, dass sie die Zapfen 19 aufnehmen können. Der Zapfen 19 weist eine unterseitige Anlagefläche 22 auf, welche angepasst ist an eine oberseitige Anlagefläche 23 des jeweiligen Hohlraums 21.

Nach dem Aufstecken der Batterieeinheit 11 auf den Vorsprung 18 wird das Gerät 10 mit der Batterieeinheit 11 um deren Längsachse (siehe Fig. 1) gedreht, sodass die Zapfen 19 in die Hohlräume 21 gelangen und dabei die Anlageflächen 22 an den Anlageflächen 23 unter Reibschluss anliegen. Ladestation 13 und Batterieeinheit 11 sind auf diese Weise mechanisch miteinander verriegelt und verbunden.

Eine elektrische Verbindung zwischen Batterieeinheit 11 und Ladestation 13 wird hier erzielt durch einen Mittenkontakt 24 und einen Ringkontakt 25 am Vorsprung 18 einerseits und ein Kontaktpaar 26 an der Batterieeinheit 11 andererseits. Nach dem Aufstecken und Drehen der Batterieeinheit 11 auf dem Vorsprung 18 liegt das Kontaktpaar 26 mit Druck an den Kontakten 24, 25 an, sodass hohe Ströme mit geringen Verlusten übertragen werden können.

Die Verbindung zwischen der Batterieeinheit 11 und dem Gerät 10 ist in der gleichen Weise ausgebildet wie die zuvor beschriebene Verbindung zwischen der Ladestation 13 und der Batterieeinheit 11. Dabei ist ein zylindrischer Vorsprung 27 mit Zapfen 28 Teil der Batterieeinheit 11 und ragt in eine korrespondierende zylindrische Vertiefung 29 am Gerät 10. Die Zapfen 28 gelangen durch Aufstecken der Batterieeinheit 11 in Längsschlitze 30 und durch eine anschließende Drehbewegung in Hohlräume 31. Eine elektrische Verbindung zwischen der Batterieeinheit 11 und dem Gerät 10 wird hergestellt über einen Mittenkontakt 32 und einen Ringkontakt 33 am Gerät 10 einerseits sowie ein Kontaktpaar 34 am Zapfen 27 andererseits. Natürlich können die Kontakte und Kontaktpaare auch vertauscht angeordnet sein. Bevorzugt ist eine Drehwinkelunabhängigkeit der elektrischen Kontakte. Die Kontakte können aber auch so angeordnet sein, dass zunächst keine elektrische Verbindung besteht und erst nach einer Drehbewegung die Kontakte zusammengeführt werden.

Die Hohlräume 21 und 31 sind relativ zu den Längsschlitzen 20 und 30 so angeordnet, dass durch eine einzige Drehbewegung des Gerätes 10 ein mechanischer und elektrischer Kontakt oder sogar eine Verriegelung zwischen Batterieeinheit 11 und Ladestation 13 hergestellt und zugleich der mechanische Kontakt zwischen der Batterieeinheit 11 und dem Gerät 10 gelöst wird, indem die Zapfen 28 aus den Hohlräumen 31 heraus und in die Längsschlitze 30 hineinbewegt werden. Anschließend kann das Gerät 10 in Richtung der Längsachse 12 vom Vorsprung 27 abgehoben werden.

Die beschriebene Drehbewegung ist unterteilbar in zwei Teitdrehbewegungen, nämlich um einen Drehwinkel Alpha (siehe Fig. 3 a) und einen Drehwinkel Beta (siehe Fig. 3 b). Je nach den vorherrschenden Reibungsverhältnissen im Bereich der Anlageflächen 22, 23 und 35, 36 stellt sich eine Reihenfolge oder Überlagerung der Relativdrehungen zwischen Gerät 10 und Batterieeinheit 11 einerseits und Ladestation 13 und Batterieeinheit 11 andererseits ein. Die Hand des Benutzers dreht das Gerät 10 um die Summe der Winkel Alpha und Beta, sodass die Zapfen 28 in den Bereich der Längsschlitze 30 gelangen und die Zapfen 19 aus den Längsschlitzen 20 in die Hohlräume 21 gelangen.

Neben dem Zapfen 18 ist ein in gleicher Weise ausgebildeter und in Fig. 3 nicht gezeigter weiterer Zapfen an der Ladestation 13 vorgesehen zur Aufnahme der in Fig. 1 ersichtlichen Batterieeinheit 15. Das von der Batterieeinheit 11 getrennte Gerät 10 kann auf die Batterieeinheit 15 aufgesteckt werden. Durch die zuvor beschriebene Drehbewegung kann dann die Batterieeinheit 15 mit dem Gerät 10 elektrisch und mechanisch verbunden und zugleich elektrisch und mechanisch von der Ladestation 13 entkoppelt werden.

Die Ausführungsform der Fig. 3 ist besonders vorteilhaft auch im Zusammenhang mit einer hängenden Anordnung entsprechend Fig. 2. Die jeweils an der Ladestation 13 hängende Batterieeinheit ist zuverlässig mit dieser mechanisch verriegelt. Die elektrischen Kontakte sind verpolungssicher angeordnet.

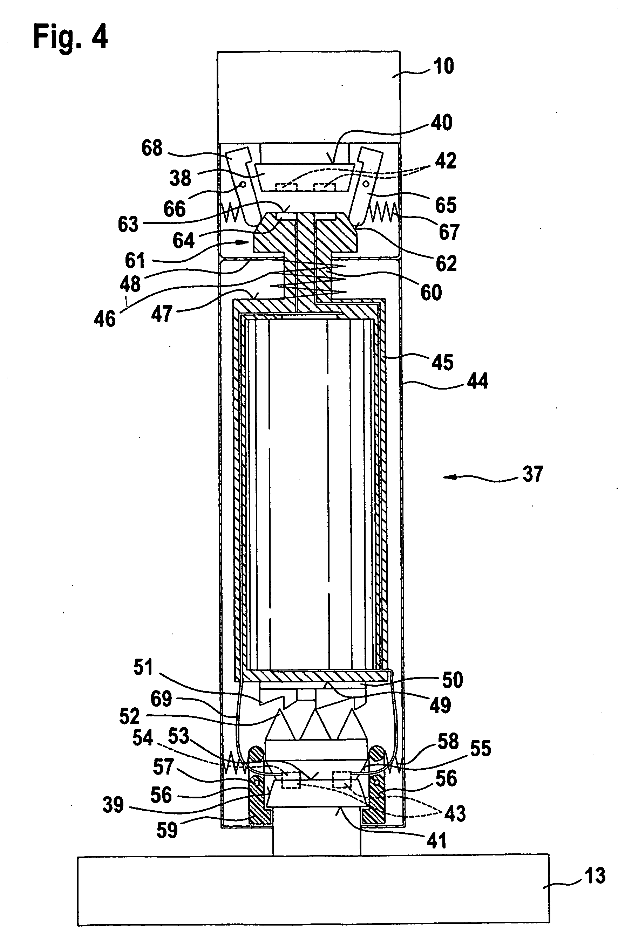

In der Ausführungsform der Fig. 4 sind die Verbindungsmittel zwischen Gerät 10 und Batterieeinheit 11 einerseits sowie zwischen Batterieeinheit 11 und Ladestation 13 andererseits so ausgebildet, dass für das Ankoppeln und Abkoppeln der jeweiligen Batterieeinheit nur eine Ab- und Auf-Bewegung in Richtung der Längsachse erforderlich ist. Die Handhabung entspricht der Betätigung eines Kugelschreibers mit Feder-Tasten-System. Die Funktionalität des Feder-Tasten-Systems wird nachgebildet durch eine besondere Gestaltung einer Batterieeinheit 37. Daneben sind auch Verbindungseinrichtungen am Gerät 10 und an der Ladestation 13 anders ausgebildet als in der Ausführungsform der Fig. 3. Gerät 10 und Ladestation 13 weisen als Aufnahmen jeweils einen Vorsprung mit Konuskopf 38, 39 auf, welcher eine umlaufende Hinterschneidung 40, 41 und ein oberseitiges Kontaktpaar 42, 43 aufweist.

Die Batterieeinheit 37 ist hier mehrteilig ausgeführt, nämlich mit einem Außengehäuse 44 und einem Innengehäuse 45, welches im Außengehäuse 44 axial beweglich ist gegen den Druck einer Feder 46. Diese drückt einerseits gegen eine Stirnwand 47 des Innengehäuses 45 und andererseits gegen ein im Außengehäuse 44 festangeordnetes Gegenlager 48.

Im Bereich der anderen Stirnwand 49 des Innengehäuses 45 sind eine drehbare Scheibe 50 und ein erster gezahnter Ring 51 angeordnet. Letzterem zugewandt ist ein zweiter gezahnter Ring 52, welcher im Außengehäuse 44 axial beweglich gehalten ist (nicht gezeigt) und mit seiner den Zähnen abgewandten Seite 53 am Konuskopf anliegt. An der Seite 53 ist ein Kontaktpaar 54 angeordnet, welches in der Darstellung der Fig. 4 am Kontaktpaar 43 anliegt und so den elektrischen Kontakt von der Batterieeinheit 37 zur Ladestation 13 herstellt.

Ausgehend von der Seite 53 weist der zweite gezahnte Ring 52 einen Konus 55 auf, welcher im Außengehäuse 44 federnd gelagerte Hebel 56 durch Bewegung in Längsrichtung einseitig beaufschlagt. Die Hebel 56 sind hier jeweils zweiarmig und um einen Drehpunkt 57 schwenkbar, mit einem ersten Hebelarm, der von einer Feder 58 beaufschlagt und gegen den Konus 55 gedrückt wird. Dabei stützt sich die Feder 58 innenseitig am Außengehäuse 44 ab. Ein zweiter Hebelarm ist als Kralle 59 ausgeführt und kann hinter die Hinterschneidung 41 greifen.

Ausgehend von der Stirnwand 47 erstreckt sich vorzugsweise konzentrisch zur Feder 46 ein Vorsprung 60 mit einem Kopf 61, welcher mit einem Konus 62 versehen ist, analog dem Konus 55. Der Konus 62 schließt mit einer Stirnseite 63 ab, analog der Seite 53. An der Stirnseite 63 ist ein elektrisches Kontaktpaar 64 angeordnet.

Das Außengehäuse 44 weist an seinen beiden Stirnseiten Öffnungen zum Eintritt des Konuskopfes 39 der Ladestation 13 bzw. des Konuskopfes 38 des Gerätes 10 auf. Analog zu den Hebeln 56 sind im Bereich des Konus 62 zweiarmige Hebel 65 um je einen Drehpunkt 66 schwenkbar gelagert. Die Drehpunkte 66 sind relativ zum Außengehäuse 44 ortsfest angeordnet, genau so wie die Drehpunkte 57. Ein Arm der Hebel 65 ist jeweils mit einer Druckfeder 67 beaufschlagt in Richtung auf den Konus 62, während der andere Arm als Kralle 68 ausgebildet ist und hinter die Hinterschneidung 40 greifen kann.

In Analogie zur Betätigung eines Kugelschreibers hat der zweite gezahnte Ring 52 die Funktion des Druckknopfes (des Kugelschreibers). Das Gerät 10 wird mit der Batterieeinheit 37 auf den Konuskopf 39 aufgesetzt. Letzterer drückt dabei über den ersten gezahnten Ring 51 gegen das Innengehäuse 45 und bewegt dieses relativ zum Außengehäuse 44 gegen den Druck der Feder 46. Dabei dreht sich der erste gezahnte Ring 51 durch Zusammenwirken der schräggerichteten Flächen bzw. Zähne zwischen den beiden Ringen 51, 52 um einen definierten Winkel mit der gleichen Drehrichtung. Durch die Anordnung der drehbaren Scheibe 50 wird erreicht, dass sich das Innengehäuse 45 nicht mitdreht. Zugleich werden die Hebel 56, 65 durch Anlage an dem jeweiligen Konus 55, 62 verschwenkt zum Schließen der Kralle 59 und zum Öffnen der Kralle 68. Auf diese Weise wird die Batterieeinheit 37 mit der Ladestation mechanisch und elektrisch verbunden, sogar verriegelt, während das Gerät 10 von der Batterieeinheit 37 abgekoppelt wird.

Anschließend kann das Gerät 10 mit dem Konuskopf 38 an eine an der Ladestation 13 gehaltene weitere Batterieeinheit (nicht gezeigt) angekoppelt werden.

In Analogie zum Kugelschreiber hat das Innengehäuse 45 die Funktion der Kugelschreibermine, während das Außengehäuse 44 dem Kugelschreibergehäuse entspricht.

Aufgrund der Relativbewegung des Innengehäuses 45 und/oder des zweiten gezahnten Ringes 52 zum Außengehäuse 44 sind flexible elektrische Leitungen 69 zum Kontaktpaar 54 am Konus 55 vorgesehen.

Insgesamt genügt zum Ankoppeln der Batterieeinheit 37 an die Ladestation 13 und zum Abkoppeln der Batterieeinheit vom Gerät 10 eine auf- und abwärtsgerichtete Bewegung der Batterieeinheit. Analog gilt dies für das Aufnehmen der neuen Batterieeinheit von der Ladestation und das Ankoppeln an das Gerät 10.

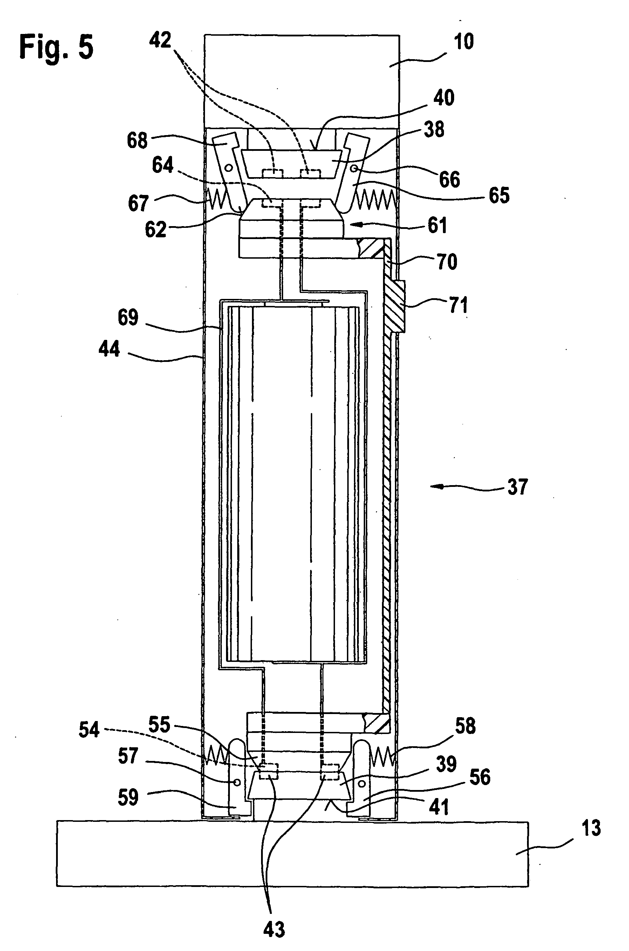

Eine Ausführungsform ähnlich der zuvor beschriebenen zeigt Fig. 5. Funktionsgleiche Teile sind mit gleichen Ziffern bezeichnet. Auch hier erfolgt das Ankoppeln der Batterieeinheit 37 an die Ladestation 13 durch eine lineare Steckbewegung. Zum mechanischen Verriegeln der Verbindung zwischen Batterieeinheit 37 und Ladestation 13 einerseits und zum Entriegeln der Verbindung zwischen Batterieeinheit und Gerät 10 andererseits ist hier aber eine Schiebereinrichtung 70 vorgesehen, mit einem am Außenumfang des Außengehäuses 44 zugänglichen Schiebeknopf 71. Durch Verschieben des Knopfes 71 in Längsrichtung der Batterieeinheit werden die Konusse 55, 62 simultan zueinander entweder in Richtung auf die Ladestation 13 oder in Richtung auf das Gerät 10 bewegt. Zum Ankoppeln an die Ladestation 13 wird der Knopf 71 in Richtung auf die Ladestation 13 bewegt. Dadurch laufen die freien Arme der Hebel 56 auf den Konus auf, so dass die Krallen 59 hinter die Hinterschneidungen 41 greifen und die Batterieeinheit mit der Ladestation 13 mechanisch verriegeln. Dabei werden auch die Kontaktpaare 43 und 54 aufeinander gepresst, so dass hohe Ströme mit geringsten Verlusten übertragen werden können.

Auf der anderen Seite der Batterieeinheit werden die Hebel 65 durch das Zusammenwirken von Konus 62 und Federn 67 zum Öffnen der Krallen 68 bewegt, so dass letztere nicht mehr hinter die Hinterschneidung 40 greifen und eine Entriegelung der mechanischen Verbindung zum Gerät 10 stattfindet. Zugleich hebt der Kopf 61 mit den Kontaktpaaren 64 von den Kontaktpaaren 42 ab, damit auch die elektrische Verbindung unterbrochen wird.

Die beiden Konusse 55, 62 sind durch die Schiebereinrichtung starr und mit festem Abstand zueinander gekoppelt. Die Übertragung der Bewegung des Schiebeknopfes 71 auf die Konusse 55, 62 und Krallen 59, 68 ist derart, dass jeweils die Krallen zur Verriegelung betätigt werden, in deren Richtung der Knopf 71 bewegt wird. Dies verbessert die ergonomischen Eigenschaften der Vorrichtung. Nach dem Aufsetzen des Gerätes 10 mit Batterieeinheit 37 auf die Ladestation 13 ist nur noch eine Bewegung des Schiebeknopfes 71 in Richtung auf die Ladestation 13 erforderlich zum Auslösen der Verriegelung auf der einen Seite und Entriegelung auf der anderen Seite. In analoger Weise wird eine geladene Batterieeinheit (nicht gezeigt) von der Ladestation 13 aufgenommen. Der .Knopf 71 muss dann in Richtung auf das Gerät 10 bewegt werden.

Die elektrischen Kontakte bzw. Kontaktpaare sind in den Figuren nur beispielhaft angegeben. Andere räumliche Anordnungen und Ausbildungen der Kontakte sind möglich, auch eine Gestaltung der Kontakte für die Ausführungsformen der Fig. 4 und 5 entsprechend der Ausführungsform der Fig. 3 und umgekehrt. Bevorzugt wird eine Gestaltung derart, dass es für die Sicherheit der elektrischen Verbindung nicht auf den Drehwinkel der Batterieeinheit relativ zur Ladestation oder zum Gerät ankommt und Verpolungssicherheit besteht.

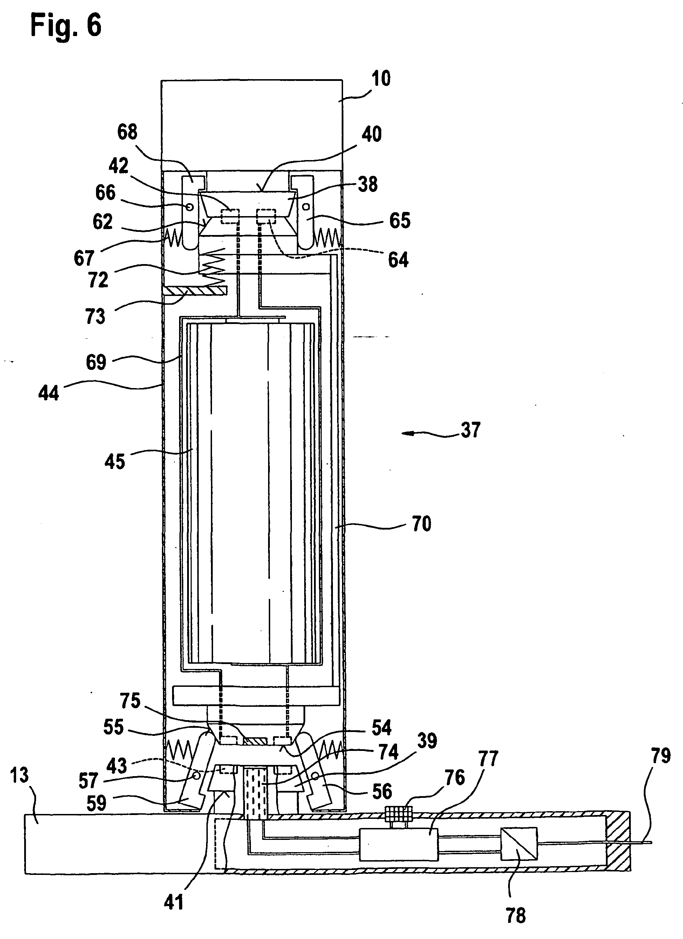

In der Ausführungsform gemäß Fig. 6 ist eine elektromagnetisch gesteuerte Verriegelung der Batterieeinheit 37 an der Ladestation 13 und am Gerät 10 vorgesehen. Ausgegangen wird von einem Zustand, in dem die Batterieeinheit an das Gerät 10 angekoppelt ist, wie auch in Fig. 6 dargestellt. Dabei greifen die Krallen 68 hinter die Hinterschneidung 40 am Konuskopf 38, sodass der Konus 62 am Konuskopf 38 anliegt und die Kontaktpaare 42 und 64 miteinander elektrisch verbunden sind. Dieser Zustand ist ohne Einwirkung von außen stabil durch die Kraft einer Druckfeder 72 zwischen dem Konus 62 und einem Gegenlager 73.

Im Konuskopf 39 ist ein Elektromagnet 74 angeordnet, der bei Stromfluss auf einen Metallkörper 75 im Konus 55 wirkt und so den Konus 55 an den Konuskopf 39 heranzieht. Dabei greifen die Hebel 56 hinter die Hinterschneidung 41 durch Beaufschlagung der Außenflächen des Konus 55. Außerdem gelangen die Kontaktpaare 54 zur Anlage an den Kontaktpaaren 43. In dieser nicht gezeigten Position liegt der Metallkörper 75 dicht am Elektromagneten 74 oder weist hierzu einen nur geringen Luftspalt auf.

Der Konus 55 ist wie in der Ausführung gemäß Fig. 5 über die Schiebereinrichtung 70 mit dem Konus 62 starr verbunden. Entsprechend bewegt sich der Konus 62 mit dem Konus 55 mit, sodass die Krallen 68 von der Hinterschneidung 40 gelöst werden und die Kontaktpaare 42, 64 trennen. Dabei arbeitet die Kraft des Elektromagneten 74 gegen den Druck der Feder 72. Im Ergebnis wird durch diese Aktion die Batterieeinheit 37 vom Gerät 10 abgekoppelt und an die Ladestation 13 angekoppelt.

Die elektrische Betätigung des Elektromagneten 74 erfolgt über einen Schalter bzw. Taster 76 an der Ladestation 13 nahe der Batterieeinheit 37. Eine dem Taster 76 zugeordnete elektrische Steuerung 77 ist so ausgelegt, dass durch eine Betätigung des Tasters ein Stromfluss hergestellt wird und erst durch eine zweite Betätigung wieder ein stromloser Zustand eingestellt wird. Entsprechend bleibt der Elektromagnet 74 nach der ersten Betätigung des Tasters 76 aktiv, sodass die Batterieeinheit 37 an der Ladestation 13 angekoppelt gehalten wird. Durch eine zweite Betätigung des Tasters 76 wird der Elektromagnet 74 abgeschaltet und die Feder 72 drückt die Schiebereinrichtung 70 mit den Konussen 62, 55 wieder nach oben. Die Batterieeinheit 37 ist dann von der Ladestation 13 abgekoppelt und an das Gerät 10 angekoppelt.

Zur Versorgung mit elektrischer Energie ist der Steuerung 77 noch ein Netzteil 78 vorgeordnet, welches über ein Netzkabel 79 an das Stromnetz anschließbar ist.

Bei dieser Ausführungsform ist zum Ankoppeln der Batterieeinheit 37 an die Ladestation 13 eine einfache Steckbewegung mit einer Hand durchzuführen. Vorteilhafterweise wird der Taster 76 mit der zweiten Hand betätigt. Direkt anschließend kann mit der ersten Hand das Gerät 10 von der Batterieeinheit 37 abgehoben und auf eine geladene, mit der Ladestation 13 verbundene Batterieeinheit (entsprechend Fig. 1) aufgesetzt werden. Diese nicht gezeigte Batterieeinheit ist ebenfalls von einem Konus mit Elektromagnet und Taster gehalten.

In den gezeigten Ausführungsbeispielen sind die mechanischen Kopplungseinrichtungen bzw. Verriegelungen einerseits und die elektrischen Kontakte andererseits konstruktiv voneinander getrennt. Vorteilhaft ist auch eine Ausführungsform, bei der die mechanische Kopplung oder Verriegelung zugleich elektrische Kontakte aufweist (nicht gezeigt). Dadurch kann die Kopplungskraft zugleich als Kontaktkraft verwendet werden. Eine hohe Kontaktkraft fördert einen geringen elektrischen Übergangswiderstand. Beispielsweise können Berührungsflächen der Krallen 59, 68 und der die Konusköpfe 38, 39 aufweisenden Aufnahmen elektrische Kontakte aufweisen. Die Kraft, mit der die Krallen 59, 68 gegen die Aufnahmen drücken, ist zugleich die Kraft, mit der die elektrischen Kontakte zusammengedrückt werden. Da die Krallen 59, 68 beweglich sind, sind entweder die elektrischen Leitungen zu den Kontaktflächen an den Krallen beweglich oder der Strom wird über die Drehpunkte 57, 66 zugeführt.

## Patentansprüche

1. Vorrichtung mit zwei oder mehr Batterieeinheiten (11, 15), mit einer Ladestation (13), die zwei oder mehr Aufnahmen zum Halten und Laden der Batterieeinheiten (11, 15) aufweist, und mit einem elektrischem Gerät (10), das mit den Batterieeinheiten (11, 15) betrieben werden kann, wobei die Batterieeinheiten austauschbar und wiederaufladbar sind, **dadurch gekennzeichnet, daß** an jeder Batterieeinheit (11; 15) erste Verbindungsmittel zum Verbinden der Batterieeinheit (11; 15) mit dem Gerät (10) und zweite Verbindungsmittel zum gleichzeitigen Verbinden der Batterieeinheit (11; 15) mit der Ladestation (13) vorhanden sind, wobei die Verbindungsmittel so ausgestaltet sind, daß eine mit dem Gerät (10) verbundene Batterieeinheit (11; 15) durch einhändige Bedienung zum Laden an die Ladestation (13) ankoppelbar ist, und daß eine mit der Ladestation (13) verbundene Batterieeinheit (11; 15) durch einhändige Bedienung an das Gerät (10) ankoppelbar und mit diesem von der Ladestation (13) abkoppelbar ist, wobei die ersten und zweiten Verbindungsmittel jeweils eine mechanische Verriegelung und elektrische Kontakte (24, 25, 26) beinhalten.

2. Vorrichtung nach Anspruch 1, **dadurch gekennzeichnet, daß** die Batterieeinheiten (11, 15) elektrische Kontakte an einander gegenüberliegenden Seiten aufweisen.

3. Vorrichtung nach Anspruch 1 oder einem der weiteren Ansprüche, **dadurch gekennzeichnet, daß** die elektrische Verbindung zwischen Batterieeinheit und Gerät (10) und/oder zwischen Batterieeinheit und Ladestation (13) verpolungssicher ist, insbesondere durch verpolungssicher ausgebildete oder angeordnete elektrische Kontakte, oder durch Verbindungsmittel, die so ausgeführt sind, daß eine Verpolung ausgeschlossen ist.

4. Vorrichtung nach Anspruch 1 oder einem der weiteren Ansprüche, **dadurch gekennzeichnet, daß** die ersten und zweiten Verbindungsmittel zueinander symmetrisch ausgebildet sind, derart, daß die Batterieeinheiten (11, 15) jeweils zwei Verbindungseinrichtungen aufweisen, die sowohl mit einer Verbindungseinrichtung am Gerät (10) als auch mit einer Verbindungseinrichtung an der Ladestation (13) verbindbar sind.

5. Vorrichtung nach Anspruch 1 oder einem der weiteren Ansprüche, **dadurch gekennzeichnet, daß** die ersten und/oder zweiten Verbindungsmittel derart gestaltet sind, daß eine Batterieeinheit (11, 15) durch eine Drehbewegung des Geräts (10) gegenüber dem Gerät entriegelbar und mit der Ladestation (13) verriegelbar ist, insbesondere eine Drehbewegung um eine Drehachse, die sich vom Gerät (10) durch die Batterieeinheit zur Ladestation (13) erstreckt.

6. Vorrichtung nach Anspruch 1 oder einem der weiteren Ansprüche, **dadurch gekennzeichnet, daß** die Verbindungsmittel derart gestaltet sind, daß eine Batterieeinheit (11, 15) durch ein Feder-Taster-System wie bei einem Kugelschreiber mit dem Gerät (10) und/oder der Ladestation (13) verbindbar ist.

7. Vorrichtung nach Anspruch 6, **dadurch gekennzeichnet, daß** die Batterieeinheit (11, 15) ein Außengehäuse und ein Innengehäuse aufweist, wobei das Innengehäuse im Außengehäuse gegen die Kraft einer Feder bewegbar ist.

8. Vorrichtung nach Anspruch 1 oder einem der weiteren Ansprüche, **dadurch gekennzeichnet, daß** die Batterieeinheit (11, 15) ein von außen bedienbares Betätigungsmittel aufweist für die Betätigung von mechanischen Verriegelungen zwischen Batterieeinheit und Ladestation (13) und/oder Batterieeinheit und Gerät (10), wobei das Betätigungsmittel insbesondere ein Schieber ist.

9. Vorrichtung nach Anspruch 1 oder einem der weiteren Ansprüche, **dadurch gekennzeichnet, daß** die Ladestation (13) - zum Anschluß der Batterieeinheit (11, 15) - für jede
Batterieeinheit eine Verbindungseinrichtung mit einem starren Verriegelungsmittel aufweist, insbesondere je einen Kupplungszapfen mit Hinterschneidung, und daß die Batterieeinheit hierzu korrespondierend eine Verbindungseinrichtung mit bewegbarem Verriegelungsmittel aufweist, insbesondere einen hinter die Hinterschneidung bewegbaren Hebel.

10. Vorrichtung nach Anspruch 1 oder einem der weiteren Ansprüche, **dadurch gekennzeichnet, daß** das Gerät - zum Anschluß der Batterieeinheit (11, 15) - eine Verbindungseinrichtung mit einem vorzugsweise starren Verriegelungsmittel aufweist, insbesondere einen Kupplungszapfen mit Hinterschneidung, und daß die Batterieeinheit hierzu korrespondierend eine Verbindungseinrichtung mit bewegbarem Verriegelungsmittel aufweist, insbesondere einen hinter die Hinterschneidung bewegbaren Hebel.

11. Vorrichtung nach Anspruch 9 oder 10, **dadurch gekennzeichnet, daß** die Batterieeinheit (11, 15) bewegbare Hebel als Verriegelungsmittel aufweist, und daß die Hebel durch Anlage an bewegbaren Auflaufflächen bewegbar sind, wobei die Auflaufflächen insbesondere Teile je eines konischen Zapfens der Batterieeinheit, des Gerätes (10) und/oder der Ladestation (13) sind.

12. Vorrichtung nach Anspruch 1 oder einem der weiteren Ansprüche, **dadurch gekennzeichnet, daß** das Abkoppeln und Ankoppeln durch eine lineare Bewegung möglich ist.

## Claims

1. Device with two or more battery units (11, 15), with a recharging cradle (13) that has two or more receptacles to hold and charge said battery units (11, 15), and with an electric instrument (10) that may be operated with the battery units (11, 15), wherein said battery units may be exchanged and recharged, **characterized in that** at each battery unit (11; 15) first connection means are provided for the connection of the battery unit (11, 15) with the instrument (10) and second connection means are provided for the simultaneous connection of the battery unit (11, 15) with the recharging cradle (13), wherein the connection means are designed so that a battery unit (11; 15) connected with the instrument (10) may be coupled to the recharging cradle (13) for charging via a one-handed operation, and so that a battery unit (11; 15) connected with the recharging cradle (13) may be coupled to the instrument (10) and be decoupled from the recharging cradle (13) via one-handed operation of said instrument (10), wherein the first and second connection means respectively comprise a mechanical lock and electrical contacts (24, 25, 26).

2. Device according to claim 1, **characterized in that** the battery units (11, 15) have electrical contacts on opposing sides.

3. Device according to claim 1 or any of the additional claims, **characterized in that** the electrical connection between the battery unit and the instrument (10) and/or between the battery unit and the recharging cradle (13) is protected against battery reversal, in particular via electrical contacts designed or arranged so as to prevent battery reversal, or via connection means that are executed so that a battery reversal is precluded.

4. Device according to claim 1 or any of the additional claims, **characterized in that** the first and second connection means are designed symmetrical to one another such that the battery units (11, 15) respectively have two connection devices that may be connected both with a connection device at the instrument (10) and with a connection device at the recharging cradle (13).

5. Device according to claim 1 or any of the additional claims, **characterized in that** the first and/or second connection means are designed such that a battery unit (11, 15) may be unlocked relative to the instrument and locked with the recharging cradle (13) via a rotational movement of said instrument (10), in particular a rotational movement around a rotation axis that extends from the instrument (10) through the battery unit to the recharging cradle (13).

6. Device according to claim 1 or any of the additional claims, **characterized in that** the connection means are designed such that a battery unit (11, 15) may be connected with the instrument (10) and/or the recharging cradle (13) via a spring button system as in a ballpoint pen.

7. Device according to claim 6, **characterized in that** the battery unit (11, 15) has an external housing and an internal housing, wherein the internal housing is movable in the external housing counter to the force of a spring.

8. Device according to claim 1 or any of the additional claims, **characterized in that** the battery unit (11, 15) has an actuation means that is operable from the outside for the actuation of mechanical locks between the battery unit and the recharging cradle (13) and/or between the battery unit and the instrument (10), wherein the actuation means is in particular a slider.

9. Device according to claim 1 or any of the additional claims, **characterized in that** the recharging cradle (13) has for each battery unit a connection device - for the connection of said battery unit (11, 15) - with a rigid locking means, in particular a respective coupling catch with undercut, and **in that** the battery unit has a connection device with movable locking means corresponding to this, in particular a lever that may move behind the undercut.

10. Device according to claim 1 or any of the additional claims, **characterized in that** the instrument has a connection device - for the connection of the battery unit (11, 15) - with a preferably rigid locking means, in particular a coupling catch with undercut, and **in that** the battery unit has a connection device with movable locking means corresponding to this, in particular a lever that may move behind the undercut.

11. Device according to claim 9 or 10, **characterized in that** the battery unit (11, 15) has movable levers as locking means, and **in that** the levers are movable via placement on movable ramp surfaces, wherein the ramp surfaces are in particular parts of a respective conical catch of the battery unit, of the instrument (10), and/or of the recharging cradle (13).

12. Device according to claim 1 or any of the additional claims, **characterized in that** the decoupling and coupling is possible via a linear movement.

## Revendications

1. Dispositif doté de deux ou plusieurs blocs de batterie (11, 15), d'une station de recharge (13), qui présente deux ou plusieurs logements pour recevoir et recharger les blocs de batterie (11, 15) et doté d'un appareil électrique (10), qui peut être utilisé avec les blocs de batterie (11, 15), dans lequel les blocs de batterie sont interchangeables et rechargeables, **caractérisé en ce que** sur chaque bloc de batterie (11; 15) sont disponibles des premiers moyens de connexion, pour la connexion du bloc de batterie (11; 15) avec l'appareil (10) et des seconds moyens de connexion, pour la connexion simultanée du bloc de batterie (11, 15) avec la station de recharge (13), dans lequel les moyens de connexion sont configurés de manière à ce qu'un bloc de batterie (11; 15) relié à l'appareil (10) puisse être couplé pour être rechargé à la station de recharge (13) par une manipulation avec une seule main et **en ce qu'**un bloc de batterie (11; 15) relié à la station de recharge (13) puisse être couplé à l'appareil (10) et découplé de celui-ci de la station de recharge (13) par une manipulation avec une seule main, dans lequel les premiers et seconds moyens de connexion contiennent chacun un verrouillage mécanique et des contacts électriques (24, 25, 26).

2. Dispositif selon la revendication 1, **caractérisé en ce que** les blocs de batterie (11, 15) présentent des contacts électriques sur des côtés opposés l'un à l'autre.

3. Dispositif selon la revendication 1 ou l'une quelconque des autres revendications, **caractérisé en ce que** le raccord électrique entre le bloc de batterie et l'appareil (10) et/ou entre le bloc de batterie et la station de recharge (13) est protégé contre le risque d'inversion des polarités, en particulier grâce aux contacts électriques conçus et placés sans risque d'inversion des polarités ou grâce aux moyens de connexion, qui sont conçus de manière à ce qu'une inversion des polarités soit exclue.

4. Dispositif selon la revendication 1 ou l'une quelconque des autres revendications, **caractérisé en ce que** les premiers et seconds moyens de connexion sont conçus de façon symétrique les uns par rapport aux autres, de telle sorte que les blocs de batterie (11, 15) présentent chacun deux dispositifs de connexion, qui peuvent être raccordés à la fois à un dispositif de connexion sur l'appareil (10) et à un dispositif de connexion sur la station de recharge (13).

5. Dispositif selon la revendication 1 ou l'une quelconque des autres revendications, **caractérisé en ce que** les premiers et/ou seconds moyens de connexion sont conçus de telle sorte qu'un bloc de batterie (11, 15) est apte à être déverrouillé de l'appareil (10) et apte à être verrouillé avec la station de recharge (13) par un mouvement de rotation de l'appareil, en particulier un mouvement de rotation autour d'un axe de rotation, qui s'étend depuis l'appareil (10), à travers le bloc de batterie, jusqu'à la station de recharge (13).

6. Dispositif selon la revendication 1 ou l'une quelconque des autres revendications, **caractérisé en ce que** les moyens de connexion sont conçus de telle sorte qu'un bloc de batterie (11, 15) peut être connecté à l'appareil (10) et/ou à la station de recharge (13) par un système à bouton et ressort, similaire à un stylo à bille.

7. Dispositif selon la revendication 6, **caractérisé en ce que** le bloc de batterie (11, 15) présente un boîtier externe et un boîtier interne, dans lequel le boîtier interne est mobile dans le boîtier externe contre la force d'un ressort.

8. Dispositif selon la revendication 1 ou l'une quelconque des autres revendications, **caractérisé en ce que** le bloc de batterie (11, 15) présente un moyen d'actionnement pouvant être actionné depuis l'extérieur pour l'actionnement des verrouillages mécaniques entre le bloc de batterie et la station de recharge (13) et/ou le bloc de batterie et l'appareil (10), dans lequel le moyen d'actionnement est notamment une glissière.

9. Dispositif selon la revendication 1 ou l'une quelconque des autres revendications, **caractérisé en ce que** la station de recharge (13) - pour le raccord du bloc de batterie (11, 15) - pour chaque bloc de batterie, présente un dispositif de connexion avec un moyen de verrouillage fixe, en particulier un pivot d'accouplement avec une contre-dépouille et **en ce que** le bloc de batterie présente, de manière correspondante, un dispositif de connexion équipé d'un moyen de verrouillage mobile, en particulier un levier mobile derrière la contre-dépouille.

10. Dispositif selon la revendication 1 ou l'une quelconque des autres revendications, **caractérisé en ce que** l'appareil - pour le raccord du bloc de batterie (11, 15) - présente un dispositif de connexion avec un moyen de verrouillage de préférence fixe, en particulier un pivot d'accouplement avec une contre-dépouille et **en ce que** le bloc de batterie présente, de manière correspondante, un dispositif de connexion équipé d'un moyen de verrouillage mobile, en particulier un levier mobile derrière la contre-dépouille.

11. Dispositif selon la revendication 9 ou 10, **caractérisé en ce que** le bloc de batterie (11, 15) présente des leviers mobiles en tant que moyens de verrouillage et **en ce que** les leviers sont mobiles par le biais de l'installation de surfaces de réception mobiles, dans lequel les surfaces de réception sont en particulier des parties d'un pivot conique respectif du bloc de batterie, de l'appareil (10) et/ou de la station de recharge (13).

12. Dispositif selon la revendication 1 ou l'une quelconque des revendications précédentes, **caractérisé en ce que** le découplage et le couplage sont possibles par un mouvement linéaire.
